# EUROPÄISCHE PATENTANMELDUNG

(11) **EP 0 653 523 A2**
(43) Veröffentlichungstag der Anmeldung: **17.05.1995**
(21) Anmeldenummer: 94117791.7
(22) Anmeldetag: 10.11.1994
(51) Int. Cl.: E03D 5/01, E03D 5/012, F16K 3/314, B60R 15/00, B63B 29/14

(54) **Toilette, insbesondere tragbare Toilette**

(30) Priorität: 16.11.1993 DE 9317560 U
(71) Anmelder: CAMPING GAZ INTERNATIONAL (DEUTSCHLAND) GMBH, D-65795 Hattersheim (DE)
(72) Erfinder: Baumgartner, Heinz, D-76275 Ettlingen (DE)
(74) Vertreter: Kern, Wolfgang, Dipl.-Ing.

(57) **Zusammenfassung**

Die Erfindung betrifft eine Toilette, insbesondere tragbare Toilette für Boote, Wohnwagen oder Reisemobile, mit einem beckenförmigen, eine Abflußöffnung für die Fäkalien aufweisenden Sitz, der einen Spülwasserbehälter aufweist, einem unter dem Sitzteil anordbaren Aufhahmebehälter mit einer unterhalb der Abflußöffnung gelegenen Eintrittsöffnung für die Fäkalien und mit einem zwischen der Abflußöffnung und der Eintrittsöffnung befindlichen Ventilgehäuse mit einem flachen Ventilschieber.

Zur Verbesserung der Abdichtung des Schieberventils und damit zur Steigerung der Gebrauchstüchtigkeit der Toilette ist der Ventilschieber (18) als Durchschiebeschieber ausgebildet, der in seiner Schieberplatte (5) einen Öffnungsteil (6) und einen Schließteil (7) aufweist, die aufeinanderfolgend unter die Abflußöffnung (25) schiebbar sind.

## Beschreibung

Die Erfindung betrifft eine Toilette, insbesondere tragbare Toilette, gemäß dem Oberbegriff des Anspruchs 1.

Derartigen Toiletten, die aus der US-PS 3 801 991 sowie der US-PS 3 333 814 bekannt sind, haflet der Nachteil an, daß die Ventilschieberkonstruktion die zwischen der Abflußöffnung des Sitzteils und der Eintrittsöffnung des Aufnahmebehälters befindlichen Dichtungen stark beansprucht, so daß das Ventil bei längerem Gebrauch undicht wird, was zur Folge hat, daß bei geschlossenem Ventil die im Aufnahmebehälter befindlichen Fäkalien aufgrund der auftretenden Undichtigkeit auslaufen können, und zwar insbesondere dann, wenn der Behälter zur Entleerung weggetragen wird.

Die im Laufe der Zeit auftretende mangelhafte Abdichtung der Dichtungseinrichtungen ist darauf zurückzurführen, daß beim Schließen des Ventilschiebers dessen Randkante die auf der Oberfläche der Ventilplatte zu liegen kommenden Lippen der Dichtungsringe, die im geöffneten Zustand des Ventils aneinanderliegen, auseinanderdrücken muß, um diese auf die Höhe der Oberfläche der Schieberplatte anzuheben und dadurch mit dieser Oberfläche in Dichtungsberührung zu bringen. Dieses Auseinanderdrücken der elastischen und relativ empfindlichen Dichtungslippen hat deren Abnutzung zur Folge, wobei oftmals auch die Wirkung beobachtet wird, daß die aufeinanderliegenden Dichtungslippen beim Eindringen der Randkante umklappen und dadurch nicht mehr flach auf der Oberfläche der Schieberplatte aufliegen. Insbesondere gefährdet ist dabei die Dichtung, die mit der Schieberunterseite in Berührung kommt, weil diese Unterseite bei geschlossenem Schieber von den Fäkalien umspült wird, so daß diese Unterseite nach dem Entleeren des Aufnahmebehälters mit Schmutz behaftet bleibt, wodurch die Dichtungslippen besonders beansprucht werden.

Die Aufgabe der Erfindung besteht deshalb darin, die Toilette der oben genannten Art so zu verbessern, daß die Abdichtung des Schieberventils wesentlich länger hält und dadurch die Gebrauchstüchtigkeit der Toilette erheblich gesteigert wird.

Diese Aufgabe wird erfindungsgemäß dadurch gelöst, daß der Ventilschieber als Durchschiebschieber ausgebildet ist, der in seiner Schieberplatte einen Öffnungsteil und einen Schließteil aufweist, die aufeinanderfolgend unter die Abflußöffnung schiebbar sind.

Während also bei der genannten Konstruktion der Schieber nur einen Schließteil aufweist und im Öffnungszustand und damit Betriebszustand der Toilette die Schieberplatte vollständig aus der Abflußöffnung entfernt ist, ist beim Erfindungsvorschlag die Schieberplatte auch mit einem Öffnungsteil versehen, der eine Verlängerung des Schließteils darstellt, sich also in derselben Ebene wie letztere befindet, was zur Folge hat, daß die Dichtungsringe unabhängig davon, ob die Toilette sich im Betriebszustand befindet, also die Abflußöffnung geöffnet ist oder durch Schließen des Schiebers außer Betrieb ist, ständig mit der Schieberoberfläche in Berührung stehen. Die Dichtungsringe brauchen also nicht bei jeder Inbetriebnahme der Toilette von dem Schieber erst auseinandergedrückt zu werden, um sie mit der Schieberoberfläche in Dichtungsberührung zu bringen. Dadurch werden die Dichtungsringe erheblich geringer beansprucht und nutzen sich deshalb weniger schnell ab.

Gemäß einer vorteilhaften Ausgestaltung der Erfindung besteht das den Schieber umgebende Ventilgehäuse aus einem Gehäuseoberteil und einem Gehäuseunterteil, die miteinander dicht verbindbar sind und je eine Öffnung aufweisen, die deckungsgleich übereinander liegen und mit der Öffnung im Öffnungsteil der Schieberplatte korrespondieren. Die Öffnungen können von Ringflanschen umgeben sein, die mehrteilige Dichtungsanordnungen zur Abdichtung des Durchschubschiebers im Schließzustand sowie zur Abdichtung der Abflußöffnung im Sitzteil und der Eintrittsöffnung im Aufnahmebehälter der Toilette aufweisen.

Um eine geradlinige Bewegung des Ventilschiebers beim Öffnen und Schließen des Ventils sicherzustellen, hat es sich bewährt, die oben genannten Öffnungen auch auf der zur Oberfläche der Schieberplatte gerichteten Seite mit Ringflanschen zu versehen, zwischen denen die Schieberplatte sich hindurchbewegt.

Gemäß einer weiteren vorteilhaften Ausgestaltung der Erfindung weist die Dichtungseinrichtung für das den Ringflansch aufweisende Ventilgehäuseoberteil eine S-förmig profilierte, elastische Ringdichtung auf deren untere Lippe im Schließzustand des Ventils mit der Oberfläche des Schließteils des Ventilschiebers in abdichtender Berührung steht und deren obere Lippe zwischen dem Ringflansch und einem in etwa S-förmig profilierten, festen Ringkörper der Dichtungseinrichtung eingespannt ist, auf den seinerseits ein Klemmring der Dichtungsvorrichtung aufsetzbar ist, der zwischen sich und dem Ringkörper eine O-Ringdichtung zur Abdichtung eines die Eintrittsöffnung des Sitzteils begrenzenden, zylindrischen Wandstücks einspannt.

Dazu kommt, daß zweckmäßigerweise auch die zu dem unteren Ventilgehäuse gehörende Dichtungseinrichtung mit einer S-förmig profilierten, elastischen Ringdichtung versehen werden kann, die der profilierten Ringdichtung der Dichtungseinrichtung für das Ventilgehäuseoberteil entspricht, und daß die S-förmige Ringdichtung im Einbauzustand der Dichtungseinrichtung und in Schließstellung des Ventilschiebers mit ihrer unteren Lippe auf der unteren Oberfläche des Schließteils aufliegt und dabei von dem Ringflansch der Öffnung des Ventilgehäuseunterteils umgeben ist, während die S-förmige Ringdichtung in Schließstellung mit ihrer oberen Lippe auf dem Ringflansch eines zu der Dichtungseinrichtung gehörenden zylindrischen Rohrstücks aufliegt, der sich am oberen Ende des Rohrstücks befindet, das im Einbauzustand der Dichtungseinrichtung die profilierte Ringdichtung festklemmt. Die äußere Oberfläche dieses Rohrstücks kann mit Nocken versehen sein, die in zu ihnen passende Aussparungen des Randes des der Eintrittsöffnung des Aufnähmebehälters greifen.

Weitere Ausgestaltungen der Erfindung sind den Unteransprüchen zu entnehmen.

Die Erfindung wird nachfolgend anhand der in der Zeichnung dargestellten Ausführungsbeispiele näher erläutert. In der Zeichnung zeigen:
- Fig. 1: eine schematische Längsschnittansicht des Ventilschiebergehäuses mit Durchschubschieber und zugehöriger Dichtungsanordnung im Einbauzustand zwischen dem Sitzteil und dem Aufnahmebehälter,
- Fig. 2: eine Draufsicht des Ventilschiebergehäuses von Fig. 1,
- Fig. 3: eine auseinandergezogene Darstellung der Schiebergehäuseteile und Dichtungsanordnungsteile des Ventilschiebers im Längsschnitt,
- Fig. 4: eine Draufsicht und Stirnansicht der Schieberplatte und
- Fig. 5: eine Querschnittsansicht der Schieberplatte von Fig. 4 mit einem Ausschnitt des Randbereiches des Öffnungsteils der Schieberplatte.

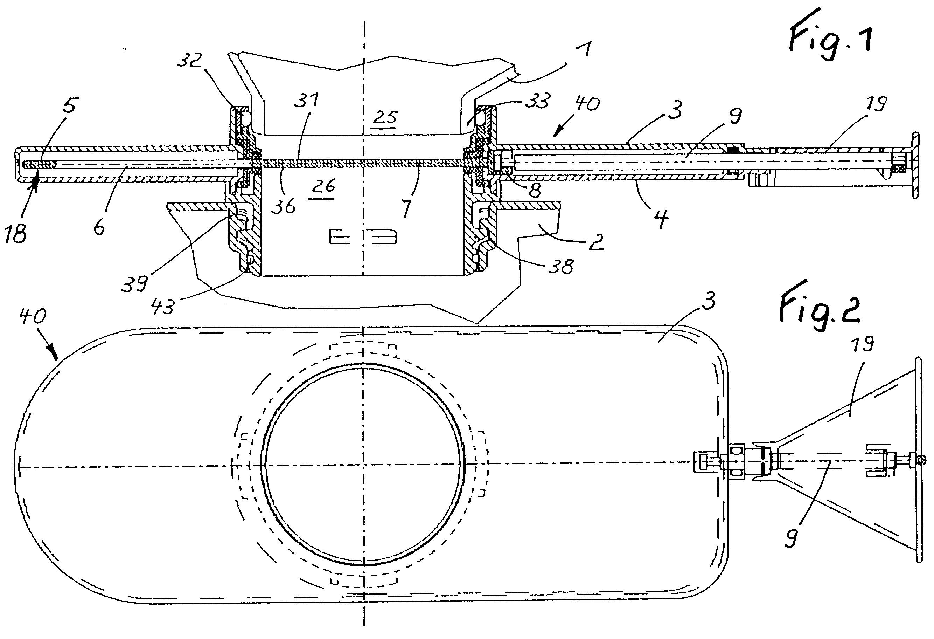

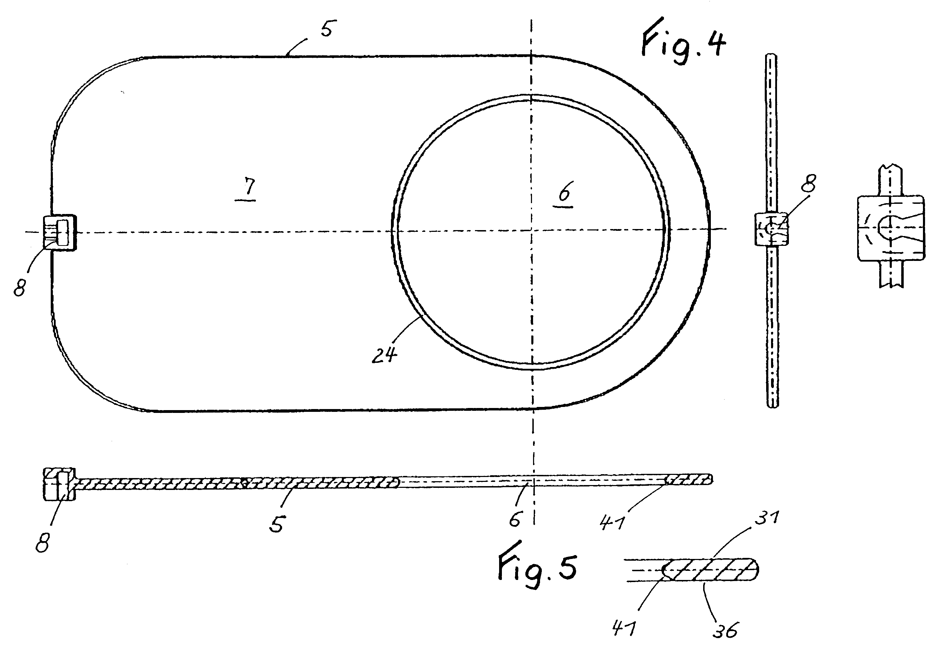

Der in den Figuren 1 - 5 dargestellte Ventilschieber 18 weist einen Öffnungsteil 6 und einen Schließteil 7 auf, die in der Schieberplatte 5 hintereinanderliegend angeordnet sind und daher aufeinanderfolgend unter die Abflußöffnung 25 des teilweise dargestellten Sitzteils 1 der tragbaren Toilette schiebbar sind, um das den Fäkaliendurchtritt aus dem Sitzteil 1 in den Aufnahmebehälter 2 steuernde Ventil zu öffnen oder zu schließen.

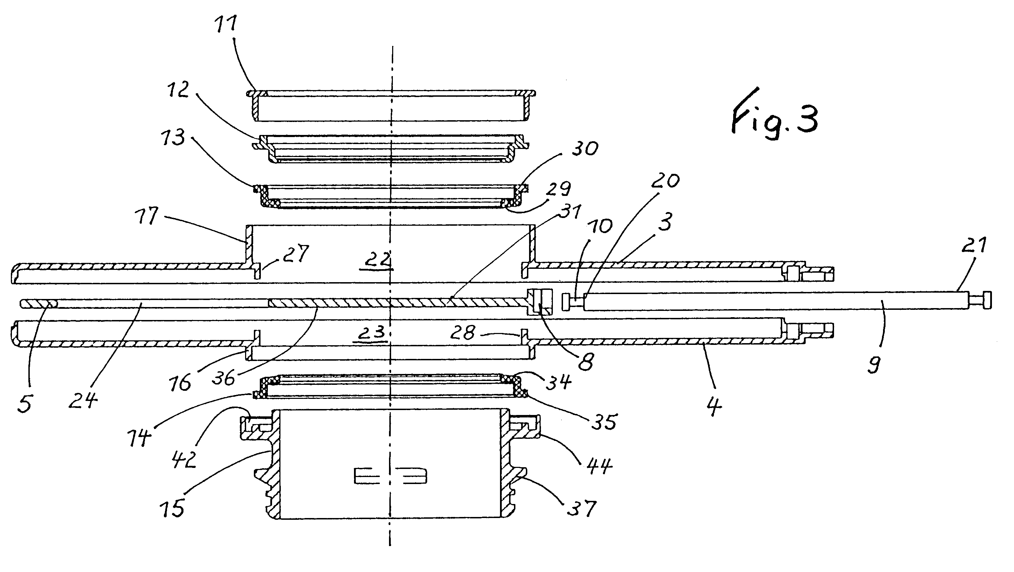

Der Ventilschieber 18 ist in einem flachen Ventilgehäuse 40 angeordnet, bestehend aus einem Gehäuseoberteil 3 und einem Gehäuseunterteil 4, die miteinander dicht verbunden sind und deckungsgleich übereinander liegen und mit der Öffnung 24 (Fig. 3) im Öffnungsteil 6 der Schieberplatte 5 korrespondieren.

Der Ventilschieber 18 befindet sich in der in Fig. 1 zu sehenden Stellung in der Schließstellung, d.h., sein Schließteil 7 sperrt den Durchfluß der Fäkalien aus dem Sitzteil 1 in den Aufnahmebehälter 2. Zur Öffnung des Ventilschiebers dient eine Betätigungsstange 9, die an ihrem einen Ende 20 durch eine Kupplungseinrichtung 8, 10 mit der Schieberplatte 5 und an ihrem anderen Ende 21 mit einem Handgriffteil 19 verbunden ist, mit dessen Hilfe die Schieberplatte hin- und herbewegt wird.

Die Öffnungen 22 und 23 im Ventilgehäuseoberteil 3 bzw. -unterteil 4 sind von Ringflanschen 17, 16 umgeben, die mehrteilige Dichtungsanordnungen 11, 12, 13, 14, 15 zur Abdichtung des Durchschubschiebers 18 im Schließzustand sowie zur Abdichtung der Abflüßöffnung 25 im Sitzteil 1 und der Eintrittsöffnung 26 im Aufnahmebehälter 2 der Toilette aufweisen. Auf der zur Oberfläche der Schieberplatte 5 gerichteten Seite sind die Öffnungen 22, 23 mit Ringflanschen 27, 28 ausgestattet, die die Schieberplatte 5 beim Hin- und Herbewegen des Ventilschiebers geradlinig führen, indem sie zwischen sich einen Führungsspalt bilden, durch den die Schieberplatte hindurchgleiten kann, wie aus Fig. 1 ersichtlich.

Die Dichtungsanordnung 11, 12, 13 für das den Ringflansch 17 aufweisende Ventilgehäuseoberteil 3, weist, wie aus Fig. 3 ersichtlich, eine S-förmig profilierte, elastische Ringdichtung 13 auf, die mit einer unteren Lippe 29 und einer oberen Lippe 30 versehen ist. Die untere Lippe 29 steht im Schließzustand des Ventils, also in dem in Fig. 1 dargestellten Zustand, mit der Oberfläche 31 des Schließteils 7 des Ventilschiebers 18 in abdichtender Berührung. Die obere Lippe 30 ist zwischen dem Ringflansch 27 des Gehäuseoberteils 3 und einem in etwa S-förmig profilierten, festen Ringkörper 12 dieser Dichtungseinrichtung eingespannt. Auf diesen Ringkörper 12 ist ein Klemmring 11 aufsetzbar, der zwischen sich und dem Ringkörper 12 eine O-Ringdichtung 32 einschließt, welche zur Abdichtung einer die Eintrittsöffnung 25 des Sitzteils 1 begrenzenden, zylindrischen Wandstücks 32 dient, das von oben in den Ventilschieber eingesteckt wird, wenn der Sitzteil 1 auf dem Aufnahmebehälter 2 beispielsweise durch seitlich an ihnen angebrachte, nicht dargestellte Klammern befestigt wird.

Die zu dem unteren Ventilgehäuseteil 4 gehörende Dichtungseinrichtung weist ebenfalls eine S-förmig profilierte, elastische Ringdichtung 14 auf die der profilierten Ringdichtung 13 entspricht und im Einbauzustand der Dichtungseinrichtung sowie in Schließstellung des Ventilschiebers 18 mit ihrer unteren Lippe 34 auf der unteren Oberfläche 36 des Schließteils 7 aufliegt, wie aus Fig. 1 ersichtlich, und dabei von dem Ringflansch 28 der Öffnung 23 des Ventilgehäuseunterteils 4 umgeben ist. Die obere Lippe 35 der Ringdichtung 14 liegt in Schließstellung auf dem Ringflansch 44 eines zu der Dichtungseinrichtung gehörenden zylindrischen Rohrstücks 15 auf. Der Ringflansch befindet sich am oberen Ende des Rohrstücks, das im Einbauzustand der Dichtungseinrichtung die profilierte Ringdichtung 14 festklemmt. Die äußere Oberfläche des Rohrstücks 15 ist mit Nocken 37 versehen, die in zu ihnen passende Aussparungen des Randes 38 der Eintrittsöffnung 39 des Aufnahmebehälters 2 greifen, so daß zwischen der Dichtungseinrichtung für das Ventilgehäuseunterteil 4 und dem Aufnahmebehälter 2 eine feste Verbindung besteht. Bei dieser Verbindung greift der Ringflansch 16 des Ventilgehäuseunterteils 4 in eine Ringnut 42 des Ringflansches 44 am oberen Ende des Rohrstücks 15, wodurch das Ventilgehäuse auf dem Aufnahmebehälter sicher verankert wird. Zur Abdichtung zwischen dem Rand 38 der Eintrittsöffnung 39 und dem zylindrischen Rohrstück 15 dient die O-Ringdichtung 43.

Die gesamte Toilette einschließlich des Ventilgehäuses 4 und der Dichtungseinrichtungen 11, 12, 13, 14, 15 besteht aus Kunststoff. Da der Durchmesser der Öffnung 24 im Öffnungsteil 6 kleiner ist als der Innendurchmesser der Ringdichtungen 13 und 14, liegen die der unteren Oberfläche 36 und der oberen Oberfläche 31 der Schieberplatte 5 zugewandten Dichtungslippen 34 bzw. 29 nicht nur auf den genannten Oberflächen des Öffnungsteils 6 sondern auch des Schließteils 7 auf, was bedeutet, daß die gegenüberliegenden Dichtungslippen von der Schieberplatte 5 ständig auseinander und mit den beiden Oberflächen in Dichtungsberührung gehalten werden. Dadurch wird vermieden, daß diese Dichtungslippen beim Hin- und Herschieben des Ventilschiebers zu stark beansprucht werden, da sie nicht auseinandergedrückt werden müssen, wie dies bei Ventilschiebern der Fall ist, die nur einen Schließteil aufweisen. Im übrigen dient auch der schonenden Behandlung der beiden Ringdichtung 13 und 14 die Tatsache, daß die Öffnung 24 im Öffnungsteil 6 kreisrund ist und eine sich in Richtung zum Kreismittelpunkt hin konisch verjüngende, abgerundete Randkante 41 aufweist, da dadurch ein Hängenbleiben von Fäkalienstoffen an der Randkante weitgehend vermieden wird, was sonst zur Verschmutzung der Dichtung führen könnte.

## Patentansprüche

1. Toilette, insbesondere tragbare Toilette für Boote, Wohnwagen oder Reisemobile, mit einem beckenförmigen, eine Abflüßöffnung für die Fäkalien aufweisenden Sitzteil, der einen Spülwasserbehälter aufweist, einem unter dem Sitzteil anordbaren Aufnahmebehälter mit einer unterhalb der Abflüßöffnung gelegenen Eintrittsöffnung für die Fäkalien und mit einem zwischen der Abflüßöffnung und der Eintrittsöffnung befindlichen Ventilgehäuse mit einem flachen Ventilschieber, **dadurch gekennzeichnet,** daß der Ventilschieber (18) als Durchschiebschieber ausgebildet ist, der in seiner Schieberplatte (5) einen Öffnungsteil (6) und einen Schließteil (7) aufweist, die aufeinanderfolgend unter die Abflußöffnung (25) schiebbar sind.

2. Toilette nach Anspruch 1, **dadurch gekennzeichnet,** daß der Ventilschieber (18) an seinem einen Ende eine Betätigungsstange (9) aufweist, die an ihrem einen Ende (20) durch eine Kupplungseinrichtung (8, 10) mit der Schieberplatte (5) und an ihrem anderen Ende (21) mit einem Handgriffteil (19) verbunden ist.

3. Toilette nach Anspruch 1 oder 2, **dadurch gekennzeichnet,** daß das den Schieber (18) umgebende Ventilgehäuse (40) ein Gehäuseoberteil (3) und ein Gehäuseunterteil (4) aufweist, die miteinander dicht verbindbar sind und je eine Öffnung (22, 23) aufweisen, die deckungsgleich übereinander liegen und mit der Öffnung (24) im Öffnungsteil (6) der Schieberplatte (5) korrespondieren.

4. Toilette nach Anspruch 3, **dadurch gekennzeichnet,** daß die Öffnungen (22 und 23) von Ringflanschen (17, 16) umgeben sind, die mehrteilige Dichtungsanordnungen (11, 12, 13; 14, 15) zur Abdichtung des Durchschubschiebers (18) im Schließzustand sowie zur Abdichtung der Abflüßöffnung (25) im Sitzteil (1) und Eintrittsöffnung (26) im Aufnahmebehälter (2) der Toilette aufweisen.

5. Toilette nach Anspruch 3 oder 4, **dadurch gekennzeichnet,** daß die Öffnungen (22 und 23) auf der zur Oberfläche der Schieberplatte (5) gerichteten Seite mit Ringflanschen (27, 28) versehen sind, die im Einbauzustand des Ventilschiebers (18) die Schieberplatte (5) bei der Hin- und Herbewegung des Ventilschiebers führen.

6. Toilette nach einem der Ansprüche 4 oder 5, **dadurch gekennzeichnet**, daß die Dichtungseinrichtung (11, 12, 13) für das den Ringflansch (17) aufweisende Ventilgehäuseoberteil (3) eine S-förmig profilierte, elastische Ringdichtung (13) aufweist, deren untere Lippe (29) im Schließzustand des Ventils mit der Oberfläche (31) des Schließteils (7) des Ventilschiebers (18) in abdichtender Berührung steht und deren obere Lippe (30) zwischen dem Ringflansch (27) und einem in etwa S-förmig profilierten, festen Ringkörper (12) der Dichtungseinrichtung eingespannt ist, auf den seinerseits ein Klemmring (11) der Dichtungsvorrichtung aufsetzbar ist, der zwischen sich und dem Ringkörper (12) eine O-Ringdichtung (32) zur Abdichtung eines die Eintrittsöffnung (25) des Sitzteils (1) begrenzenden, zylindrischen Wandstücks (33) einspannt.

7. Toilette nach einem der Ansprüche 4 - 6, **dadurch gekennzeichnet**, daß die zu dem unteren Ventilgehäuseteil (4) gehörende Dichtungseinrichtung (14, 15) eine S-förming profilierte, elastische Ringdichtung (14) aufweist, die der profilierten Ringdichtung (13) der Dichtungseinrichtung für das Ventilgehäuseoberteil (3) entspricht, daß die S-förming Ringdichtung (14) im Einbauzustand der Dichtungseinrichtung und in Schließstellung des Ventilschiebers (18) mit ihrer unteren Lippe (34) auf der unteren Oberfläche (36) des Schließteils (7) aufliegt und dabei von dem Ringflansch (28) der Öffnung (23) des Ventilgehäuseunterteils (4) umgeben ist, daß die S-förming Ringdichtung (14) in Schließstellung mit ihrer oberen Lippe (35) auf dem Ringflansch (44) eines zu der Dichtungseinrichtung (14, 15) gehörenden zylindrischen Rohrstücks (15) aufliegt, der sich am oberen Ende des Rohrstücks befindet, das im Einbauzustand der Dichtungseinrichtung die profilierte Ringdichtung (14) festklemmt, und daß die äußere Oberfläche des Rohrstücks (15) mit Nocken (37) versehen ist, die in zu ihnen passende Aussparungen des Randes (38) der Eintrittsöffnung (39) des Aufnahmebehälters (2) greifen.

8. Toilette nach einem der Ansprüche 4 - 7, **dadurch gekennzeichnet,** daß die obere und die untere Oberfläche (31, 36) der Schieberplatte (5) sowohl in der Öffnungsstellung als auch in der Schließstellung des Ventilschiebers (18) mit den elastischen Ringdichtungen (13, 14) der Dichtungseinrichtungen in Berührung stehen.

9. Toilette nach einem der Ansprüche 1 - 8, **dadurch gekennzeichnet,** daß die Öffnung (24) im Öffnungsteil (6) des Ventilschiebers (18) kreisrund ist und eine sich in Richtung zum Kreismittelpunkt hin konisch verjüngende, abgerundete Randkante (41) aufweist.

10. Toilette nach einem der Ansprüche 1 - 9, **dadurch gekennzeichnet,** daß sie ausschließlich aus Kunststoff besteht.
